# EUROPÄISCHE PATENTANMELDUNG

(11) **EP 3 641 233 A1**
(43) Veröffentlichungstag der Anmeldung: **22.04.2020**
(21) Anmeldenummer: 19199091.0
(22) Anmeldetag: 24.09.2019
(51) Int. Cl.: H04L 12/403, H04L 29/12

(54) **VERFAHREN ZUM AUFLÖSEN EINES ADRESSKONFLIKTS BEI DEM MODBUS RTU-STANDARDPROTOKOLL**

(30) Priorität: 18.10.2018 DE 102018125894
(71) Anmelder: Bender GmbH & Co. KG, 35305 Grünberg (DE)
(72) Erfinder: JOST, Matthias, 35423 Lich (DE)
(74) Vertreter: advotec.

(57) **Zusammenfassung**

Die Erfindung betrifft ein Verfahren unter Verwendung des Modbus RTU-Standardprotokolls (Modbus Remote Terminal Unit) für eine Master-Slave-Kommunikation zum Auflösen eines Adresskonflikts aufgrund identisch eingestellter Geräteadressen und zum Identifizieren eines an den Modbus angeschlossenen Gerätes mit einer Gerätekennzeichnung.

Das angesprochene Gerät wird anhand seiner mit dem Anforderungs-Telegramm übertragenen Gerätekennzeichnung eindeutig identifiziert und diesem eindeutig identifiziertem Gerät wird eine neue Gerätadresse mit dem gesendeten Anforderungs-Telegramm übermittelt.

Der Grundgedanke der vorliegenden Erfindung beruht vorteilhafterweise darauf, dass zur Vergabe einer eindeutigen Geräteadresse nur der Standardkommunikationsweg, also die standardisierte Master-Slave-Kommunikation auf dem Bus verwendet wird und zur eindeutigen Identifizierung eines Gerätes dessen inhärent vorhandene Gerätekennzeichnung, wie z.B. die Seriennummer (siehe unten), benutzt wird.

## Beschreibung

Die Erfindung betrifft ein Verfahren unter Verwendung des Modbus RTU-Standardprotokolls (Modbus Remote Terminal Unit) für eine Master-Slave-Kommunikation zum Auflösen eines Adresskonflikts aufgrund identisch eingestellter Geräteadressen und zum Identifizieren eines an den Modbus angeschlossenen Gerätes mit einer Gerätekennzeichnung.

Ein von dem Master gesendetes Anforderungs-Telegramm besitzt folgende in der Modbus RTU-Spezifikation definierte Struktur: Ein Adressfeld für eine Geräteadresse, dem ein Feld für einen Funktionscode und ein Datenfeld sowie ein CRC-Prüffeld folgt, wobei in dem Datenfeld eine Startregisteradresse für ein Startregister und eine Registeranzahl angegeben werden, die ausgehend von der Startregisteradresse einen Registerbereich unmittelbar aufeinanderfolgende Register definieren.

Die serielle Übertragung gemäß Modbus RTU-Spezifikation macht es für die Kommunikation zwischen Master und Slave erforderlich, dass jedes an den Bus angeschlossene Gerät (Busteilnehmer) eine eindeutige Geräteadresse (Busadresse) besitzt, unter der das Gerät von dem Master angesprochen werden kann. So muss jeder Teilnehmer eine eindeutige Adresse im Bereich von 1 bis 247 zugewiesen bekommen. Sind zwei oder mehrere identische Adressen vergeben, so werden entsprechend viele Geräte von demselben Anforderungs-Telegramm des Masters adressiert und senden eine Antwort. Dieses gleichzeitige Antworten hat einen Adresskonflikt auf dem Bus zur Folge, die von dem Master lediglich durch das Auftreten eines Übertragungsfehlers erkannt wird. Die Ursache, nämlich die mehrfach vergebene gleiche Geräteadresse, kann durch den Master nicht aufgelöst werden.

Aus fertigungstechnischen Gründen ist es vorteilhaft, dass gleiche Gerätetypen, wie beispielsweise Sensoren einer bestimmten Ausführung, auch identisch konfiguriert ausgeliefert werden - zumal der Adressvorrat lediglich 247 Adressen vorsieht. In Folge sind bei einem Anschluss mehrerer dieser Geräte an einen gemeinsamen Bus auch gleiche Geräteadressen mehrfach vergeben. In der Modbus RTU-Spezifikation ist die Vergabe einer eindeutigen Busadresse für jeden Busteilnehmer als Voraussetzung für eine fehlerfreie Übertragung beschrieben. Es wird jedoch keine Methode genannt, wie eine derart eindeutige Vergabe erreicht werden kann.

Es existieren zwar Lösungen die Geräteadresse per Busbefehl zu setzen, jedoch kann dabei ein Adresskonflikt nicht erkannt oder aufgelöst werden.

Bislang wurde dem Problem des Adresskonflikts dadurch begegnet, dass in der Kommissionierungsphase, also vor dem regulären Betrieb des Gerätes, dem jeweiligen Busteilnehmer durch ein Einstellelement eine Geräteadresse zugewiesen wird, wobei der Betreiber darauf zu achten hat, dass diese manuelle Adresszuweisung eindeutig ist. Ein derartiges Einstellelement ist z.B. ein Schiebeschalter oder ein Drehschalter. Es kann aber auch eine Kodierung z.B. auf der Leiterplatte des Busteilnehmers oder auf einer Busplatine sein, sodass über die Steckposition eine Geräteadresse verknüpft wird.

Eine andere Möglichkeit ist es, die Busteilnehmer nacheinander anzuschließen und jeweils eine neue Geräteadresse ausgehend von der bekannten, voreingestellten Adresse zu vergeben.

Auch kann an einer Einrichtstation immer nur ein einziges Gerät gleichzeitig an dem Bus betrieben werden und so per Broadcast eine Adresse zugewiesen werden.

Eine weitere Möglichkeit besteht darin, den Busteilnehmer, der eine neue Busadresse über eine Broadcast-Nachricht erhalten soll, für die Umsetzung dieser Nachricht freizuschalten, in dem z.B. bei diesem Teilnehmer ein Taster oder Ähnliches betätigt wird.

Weiterhin existieren auch Lösungen, die zur Signalisierung der automatischen Auswahl einer Geräteadresse eines Busteilnehmers eine zusätzliche Signalisierungsleitung verwenden.

Schließlich kann auch die bei einem Busteilnehmer gespeicherte Geräteadresse durch zusätzliche Hardware zugänglich gemacht werden, z.B. über RFID (Radio Frequency IDentification) oder NFC (Near Field Communication).

Allen diesen Vergabeoptionen der Geräteadresse ist in nachteiliger Weise gemeinsam, dass sie entweder vor dem regulären Betrieb des Gerätes durchgeführt und abgeschlossen sein müssen und/oder zumeist zusätzliche Bauteile oder Anschlussleitungen benötigen. Zudem sind die Einstellelemente an dem Gerät oft unzugänglich angeordnet oder können sogar, wie beispielsweise bei eingelöteten oder vergossenen Sensoren, völlig unzugänglich sein.

Der vorliegenden Erfindung liegt somit die Aufgabe zugrunde, unter Verwendung des Modbus RTU-Standardprotokolls für eine Master-Slave-Kommunikation ein Verfahren zum Auflösen eines Adresskonflikts vorzuschlagen, welches ohne zusätzliche Hardware wie beispielsweise Einstellelemente oder Signalleitungen auskommt. Das Verfahren soll eine konfliktfreie Vergabe von Geräteadressen auch für unzugänglich angeordnete Geräte ermöglichen.

Diese Aufgabe wird in Verbindung mit den Merkmalen des Oberbegriffs des Anspruchs 1 dadurch gelöst, dass das durch die in dem Adressfeld angegebene Geräteadresse angesprochene Gerät anhand seiner mit dem Anforderungs-Telegramm übertragenen Gerätekennzeichnung eindeutig identifiziert wird und diesem eindeutig identifiziertem Gerät eine neue Gerätadresse mit dem gesendeten Anforderungs-Telegramm übermittelt wird.

Der Grundgedanke der vorliegenden Erfindung beruht vorteilhafterweise darauf, dass zur Vergabe einer eindeutigen Geräteadresse nur der Standardkommunikationsweg, also die standardisierte Master-Slave-Kommunikation auf dem Bus verwendet wird und zur eindeutigen Identifizierung eines Gerätes dessen inhärent vorhandene Gerätekennzeichnung, wie z.B. die Seriennummer (siehe unten), benutzt wird.

Weisen also zwei oder mehrere an den Bus angeschlossene Geräte eine in der Kommissionierungsphase gleich eingestellte ursprüngliche Geräteadresse auf, so erfolgt erfindungsgemäß die Zuweisung einer neuen eindeutigen Geräteadresse ausschließlich über die vorgesehene standardisierte Kommunikationsschnittstelle ohne dass zusätzliche Hardware benötigt wird.

Die dem Gerät ureigene Gerätekennzeichnung zur eindeutigen Identifizierung wird ebenso wie die neue Geräteadresse mit dem von dem Master gesendeten Anforderungs-Telegramm an das Gerät übermittelt.

Dabei kann die in dem Adressfeld des Anforderungs-Telegramms eingetragene ursprüngliche Geräteadresse mehrfach vergeben sein oder diese in dem Adressfeld eingetragene Adresse kann auch die Broadcast-Adresse des Modbus RTU-Standardprotokolls sein, sodass mehrere Geräte gleichzeitig angesprochen werden, jedoch der Adresskonflikt durch die Differenzierung mittels der jedem Gerät originären Gerätekennzeichnung aufgelöst wird.

In weiterer vorteilhafter Ausgestaltung enthält das Anforderungs-Telegramm in dem Feld für den Funktionscode den Modbus RTU-Funktionscode 0x10 zum Schreiben von Registern, in dem Datenfeld als Registerinhalt des definierten Registerbereiches die Gerätekennzeichnung, in dem Datenfeld als weiterer Registerinhalt des definierten Registerbereiches die neue Geräteadresse, wobei das Gerät, dessen Geräteadresse mit der in dem Adressfeld angegebenen Geräteadresse übereinstimmt und dessen Gerätekennzeichnung mit der als Registerinhalt übermittelten Gerätekennzeichnung übereinstimmt, die als weiterer Registerinhalt übermittelte Geräteadresse als neue Geräteadresse übernimmt.

Die Zuweisung der neuen Geräteadresse beruht somit darauf, dass ausgehend auf dem spezifizierten Modbus RTU-Funktionscode 0x10 zum Schreiben von Registern in dem Anforderungs-Telegramm eine um die eindeutige Gerätekennzeichnung erweiterte Adressierung des Gerätes zu dessen Identifizierung vorgenommen wird. Die erweiterte Adressierung erfolgt in der Weise, dass in dem Datenfeld des Anforderungs-Telegramms die Gerätekennzeichnung des Gerätes und die neue Geräteadresse übertragen werden.

Erfindungsgemäß reagiert nur das Gerät, dessen Gerätekennzeichnung mit derjenigen Gerätekennzeichnung übereinstimmt, die in dem Datenfeld mitgeteilt wird, auf das Anforderungs-Telegramm und übernimmt die übermittelte Geräteadresse als neue Geräteadresse. Alleine dieses Gerät übernimmt die mitgeteilte neue Geräteadresse als seine neue Geräteadresse und antwortet auf das Anforderungs-Telegramm des Masters entsprechend der Modbus RTU-Spezifikation. Bei ungleicher Gerätekennzeichnung antwortet das angesprochene Gerät nicht.

Mit Vorteil wird ein Startregisterinhalt als Selektor definiert, dessen Selektorwert Funktion und Verarbeitung von Registerinhalten des definierten Registerbereiches festlegt, wobei die Übernahme der neuen Geräteadresse als in dem identifizierten Gerät auszuführende Funktion einem bestimmten Selektorwert zugeordnet ist.

Der Inhalt des Startregisters stellt somit einen Selektor dar, dessen Wert darüber entscheidet, welche Funktion die Registerinhalte des definierten Registerbereiches haben und wie diese Registerinhalte verarbeitet werden. Jede auszuführende Funktion entspricht dabei einem bestimmten Selektorwert. So kann der vorstehend beschriebenen Übernahme der neuen Geräteadresse als in dem identifizierten Gerät auszuführende Funktion beispielsweise der Selektorwert 0x0000 zugeordnet werden, sodass bei Übertragung dieses Wertes und entsprechenden Registerinhalten die Abarbeitung der Verarbeitungsschritte zur Übernahme der neuen Geräteadresse erfolgt.

Daneben sind auch andere Selektorwerte möglich, die eine Ausführung weiterer Funktionen (siehe unten) in dem identifizierten Gerät veranlassen.

Bevorzugt umfasst der definierte Registerbereich das Startregister mit dem Selektorwert, N Register für die Gerätekennzeichnung und ein Register mit der zuzuweisenden neuen Geräteadresse.

Diese konkrete Aufteilung des Registerbereiches in dem Datenfeld erweist sich zweckmäßig in Bezug auf die Anzahl der möglichen Selektorwerte sowie hinsichtlich des Umfangs der inhärent vorhandenen Gerätekennzeichnungen und der gemäß Modbus RTU-Standard spezifizierten Anzahl der Geräteadressen.

Als vorteilhaft erweist sich, dass die Gerätekennzeichnung eine Seriennummer des Gerätes ist.

Als ureigene Gerätekennzeichnung zur eindeutigen Identifizierung des an den Modbus angeschlossenen Gerätes bietet sich die Seriennummer des Gerätes an, da davon ausgegangen werden kann, dass jedem Gerät herstellungsbedingt eine derartige eindeutige Seriennummer eingeprägt worden ist. Prinzipiell ist es aber möglich jede dem Gerät zugeordnete eindeutige Kennzeichnung als Gerätekennzeichnung zu verwenden.

In bevorzugter Ausführung antwortet jedes durch die in dem Adressfeld angegebene Geräteadresse angesprochene Gerät mit einer zufälligen Verzögerungszeit auf das Anforderungs-Telegramm des Masters zum Auslesen der Gerätekennzeichnung.

Neben dem Modbus RTU-Funktionscode 0x03 (read holding registers) können hier auch weitere Funktionscodes als Leseanforderung Anwendung finden.

Jedes durch die in dem Adressfeld angegebene Geräteadresse angesprochene Gerät antwortet mit einer eigenen zufällig bestimmten Verzögerungszeit, um eine Kollision der Antworten zu vermeiden.

Zweckmäßigerweise wird die zufällige Verzögerungszeit als Vielfaches einer Zeitschlitzdauer derart bestimmt, dass die Antworten der Geräte überlappungsfrei und Modbus RTU-konform erfolgen.

Die zufällige Verzögerungszeit besteht aus mehreren, z.B. 20 Zeitschlitzen, die jeweils eine Zeitschlitzdauer aufweisen, die so bemessen sind, dass die Antwort auf einen Lesebefehl fehlerfrei innerhalb der Zeitschlitzdauer Modbus RTU-konform versendet werden kann. Durch die auf den Zeitschlitzen beruhende zufällige Verzögerungszeit wird vermieden, dass sich die Antworten teilweise überlappen, wodurch wiederum die Wahrscheinlichkeit erhöht ist, dass eine Antwortnachricht ungestört von dem Master empfangen wird.

Bevorzugt wird die minimale Zeitschlitzdauer in Abhängigkeit der durch die Gerätekennzeichnung belegten N Register bestimmt.

Die Dauer des Zeitschlitzes ist dabei so gewählt, dass eine Geräteantwort so in einen Zeitschlitz passt, dass eine Antwort eines weiteren Gerätes im direkt folgenden Zeitschlitz nicht zu einer Verletzung der in dem Modbus RTU-Protokoll spezifizierten Idle-Zeit (Abstand der Modbus RTU Telegramme) von 3,5 Byte-Übertragungszeiten führt.

Vorliegend beträgt bei einer Abfrage der Gerätekennzeichnung, welche beispielsweise N=2 der in dem definierten Registerbereich definierten Register belegt, die Antwortlänge unter Berücksichtigung von 5 Offset-Bytes 2^{∗}N+5=9 Bytes. Als minimale Dauer des Zeitschlitzes kann somit eine Dauer von 3,5+9+3,5=16 Byte-Übertragungszeiten gewählt werden. Für eine Gerätekennzeichnung, die nur ein Register belegt (N=1), ergibt sich demnach eine minimale Dauer des Zeitschlitzes von 14 Byte-Übertragungszeiten.

Möglich ist auch, die Gerätekennzeichnung als ASCII-Zeichenkette zu übertragen und dafür beispielsweise N=10 Register zu beanspruchen.

Mit Vorteil wird im Falle eines CRC-fehlerfreien Empfangs der Antwort auf das Anforderungs-Telegramm zum Auslesen der Gerätekennzeichnung eine Zuweisung der Geräteadresse gemäß den Ansprüchen 1 bis 5 ausgeführt.

Empfängt der Master auf sein Anforderungs-Telegramm zum Auslesen der Gerätekennzeichnung eine fehlerfreie Antwort, so ist ihm die eindeutige Gerätekennzeichnung eines teilnehmenden Gerätes bekannt. Diesem weist der Master dann erfindungsgemäß eine neue Busadresse zu.

Mit Vorteil werden das Aussenden des Anforderungs-Telegramms zum Auslesen der Gerätekennzeichnung und die Zuweisung einer Geräteadresse zyklisch wiederholt ausgeführt, bis in den Antworten der Geräte kein CRC-Fehler mehr auftritt.

Das Aussenden des Anforderungs-Telegramms zum Auslesen der Gerätekennzeichnung einschließlich der Übertragung der Gerätekennzeichnung von dem Gerät an dem Master sowie das erfindungsgemäße Setzen einer neuen Geräteadresse wird zyklisch so lange wiederholt, bis in den Antworten der jeweiligen Geräte keine CRC-Fehler mehr empfangen werden. Auf diese Weise kann eine konfliktfreie Vergabe an sämtliche an den Modbus angeschlossenen Geräte durchgeführt werden.

Mit Vorteil ist ein weiterer Selektorwert vorgesehen, der als auszuführende Funktion eine Signalanzeige an dem mittels der Geräte kennzeichnend identifizierten Gerät auslöst.

Es können eine Reihe unterschiedlicher Selektorwerte eingeführt werden, die jeweils zur Ausführung einer bestimmten Funktion oder Aktion auf dem angesprochenen Gerät führen. So ist es bevorzugt auch möglich, als auszuführende Funktion eine Signalanzeige auf dem angesprochenen Gerät auszuführen, wobei dieses identifizierte Gerät beispielsweise durch eine optische oder akustische Signalisierung erkannt werden kann. Insbesondere kann eine derartige Signalisierung zur Identifizierung entfernt angeordneter Geräte hilfreich sein.

Weitere vorteilhafte Ausgestaltungsmerkmale ergeben sich aus den nachfolgenden Beschreibungen und den Zeichnungen, die eine bevorzugte Ausführungsform der Erfindung anhand von Beispielen erläutern

Es zeigen:
**Fig. 1** Ein Ablaufdiagramm für eine Master-Slave-Kommunikation gemäß Modbus RTU-Standardprotokoll,
**Fig. 2** Aufbau und Inhalt eines erfindungsgemäßen Anforderungs-Telegramms zur Auflösung eines Adresskonflikts,
**Fig. 3** ein Ablaufdiagramm zur erfindungsgemäßen Auflösung eines Adresskonflikts,
**Fig. 4** Aufbau und Inhalt eines Anforderungs-Telegramms zum Auslesen der Gerätekennzeichnung und
**Fig. 5** ein Ablaufdiagramm zum Auslesen der Gerätekennzeichnung mit zufälliger Verzögerungszeit der Antwort.

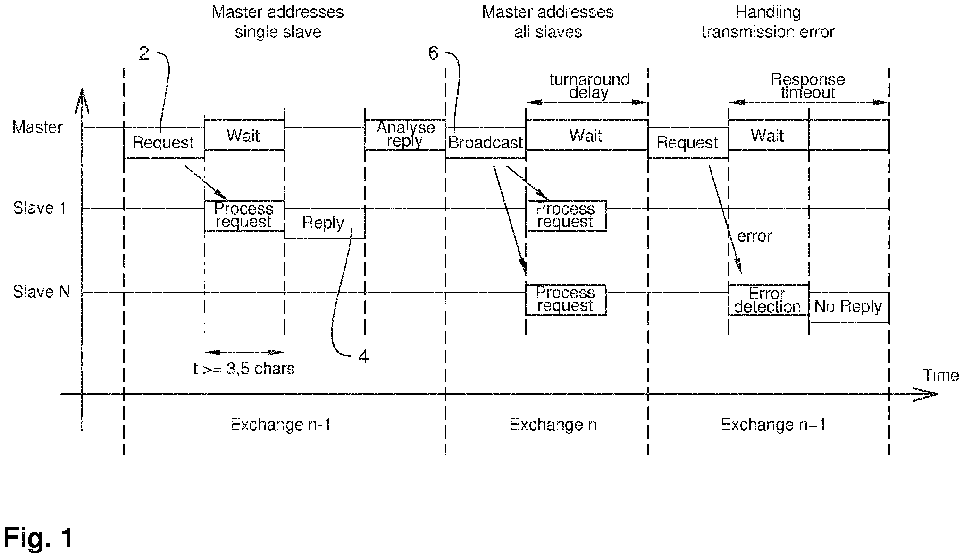

**Fig. 1** zeigt ein Ablaufdiagramm für eine Master-Slave-Kommunikation gemäß dem Modbus RTU-Standardprotokoll. Das Modbus RTU-Standardprotokoll beruht auf einer Busstruktur, bei der die gesamte Kommunikation zwischen einem Master und an dem Bus angeschlossenen Geräten (slaves) von dem Master gesteuert wird. Der Master sendet ein Anforderungs-Telegramm 2 (request) an eine bestimme Geräteadresse, wobei nur das Gerät mit dieser Geräteadresse eine Antwort 4 (reply) an den Master zurück sendet. Als Ausnahme gilt dabei ein Broadcast-Telegramm 6, welches an alle angeschlossenen Geräte gesendet wird, ohne dass eine Antwort erwartet wird. Wurde eine Geräteadresse mehrfach vergeben, so antworten mehrere Geräte gleichzeitig und der Master erkennt einen Übertragungsfehler (CRC-Fehler).

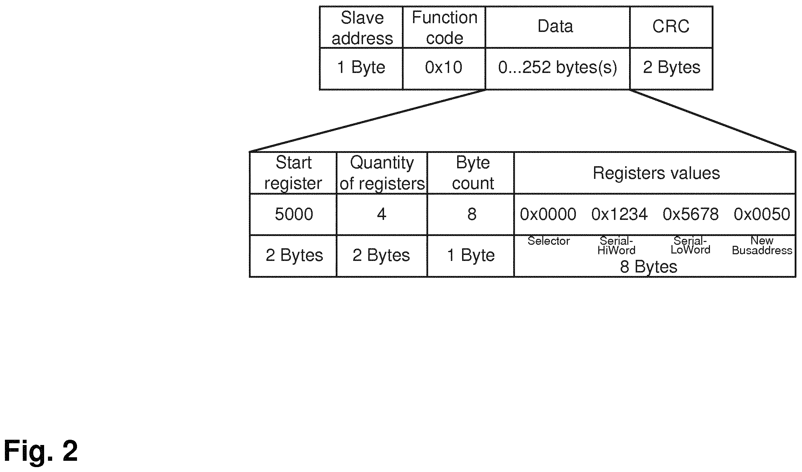

**Fig. 2** zeigt den Aufbau eines Anforderungs-Telegramms gemäß der Modbus RTU-Spezifikation mit einer erfindungsgemäßen Datenbelegung zur Auflösung eines Adresskonflikts.

Das Anforderungs-Telegramm enthält neben der Geräteadresse (slave address) des anzusprechenden Gerätes den Funktionscode 0x10 (write multiple registers), mit dem ein Schreiben von mehreren Registern in dem angesprochenen Gerät veranlasst wird. Das Datenfeld umfasst die Angabe eines Startregisters, die Anzahl der Register bzw. Bytes, die das Datenfeld umfasst, sowie die Inhalte der Register, die in dem Datenfeld übertragen werden. Das Ende des Anforderungs-Telegramms bilden zwei Byte zur CRC-Fehlererkennung.

Beispielhaft sind der Aufbau und der Inhalt eines Anforderungs-Telegramms mit folgendem Inhalt wiedergegeben:

**Registerbelegung:**

| | |
|---|---|
| Register 5000 | Selektorwert |
| Register 5001/5002 | Seriennummer |
| Register 5003 | neue Geräteadresse |

**Damit ergibt sich das Modbus RTU Anforderungs-Telegramm zu**

| | | |
|---|---|---|
| Adresse: | 0x64 | Adresse sei mehrfach vergeben |
| Function Code: | 0x10 | write multiple registers |
| Startregister: | 0x1388 | Beispiel: Startregister 5000 (= 0x1388) |
| Anzahl Register: | 4 | |
| Anzahl Bytes: | 8 | |
| Wert 1.Register: | 0x0000 | Wert Register 5000, Selektorwert 0000 |
| Wert 2.Register: | 0x1234 | High-Word der Seriennummer |
| Wert 3.Register: | 0x5678 | Low-Word der Seriennummer |
| Wert 4.Register: | 0x50 | neue Geräteadresse 80 (=0x50) |

Auf dieses Anforderungs-Telegramm reagieren alle Geräte mit der Adresse 100 (0x64), aber nur dasjenige Gerät mit der Gerätekennzeichnung (Seriennummer) 0x12345678 ändert erfindungsgemäß seine Geräteadresse in die neue Geräteadresse 80 (0x50)

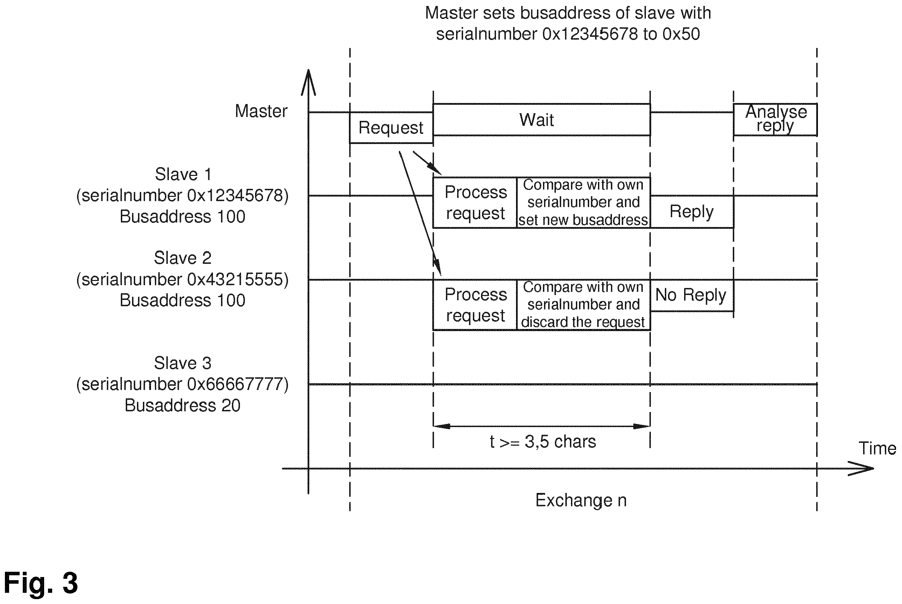

In **Fig. 3** ist der entsprechende Ablauf in einem Ablaufdiagramm zur erfindungsgemäßen Auflösung des Adresskonflikts dargestellt.

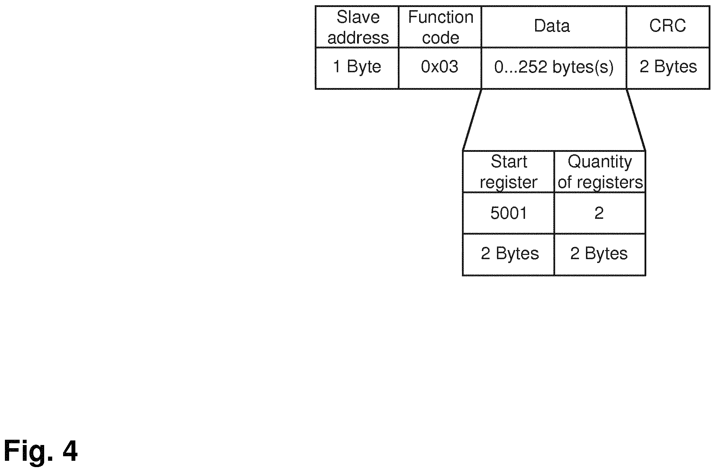

**Fig. 4** zeigt den Aufbau und Inhalt eines Anforderungs-Telegramms zum Auslesen der Gerätekennzeichnung.

Das Auslesen der Gerätekennzeichnung erfolgt dabei gemäß Modbus RTU Spezifikation mit dem Funktionscode 0x03. Das Anforderungs-Telegramm sowie die Antwort des Gerätes sind dabei wie folgt aufgebaut:

| | |
|---|---|
| Registerbelegung: Register 5001, 5002 | Seriennummer 0x12345678 |

**Modbus RTU Master request:**

| | | |
|---|---|---|
| Adresse: | 0x64 | Adresse sei mehrfach vergeben |
| Function Code: | 0x03 | read multiple registers |
| Startregister: | 0x1389 | Beispiel: Startregister 5001 (= 0x1389) |
| Anzahl Register: | 2 | |

Modbus RTU Slave response:
Gerät (Slave) ermittelt einen zufälligen Zeitschlitz 0 ... 19, z.B. 10

Gerät wartet 10 x 15ms = 150ms und sendet dann:

| | |
|---|---|
| Adresse: | 0x64 |
| Function Code: | 0x03 |
| Registerinhalt 1: | 0x1234 (High-Word eigene Seriennummer) |
| Registerinhalt 2: | 0x5678 (Low-Word eigene Seriennummer) |

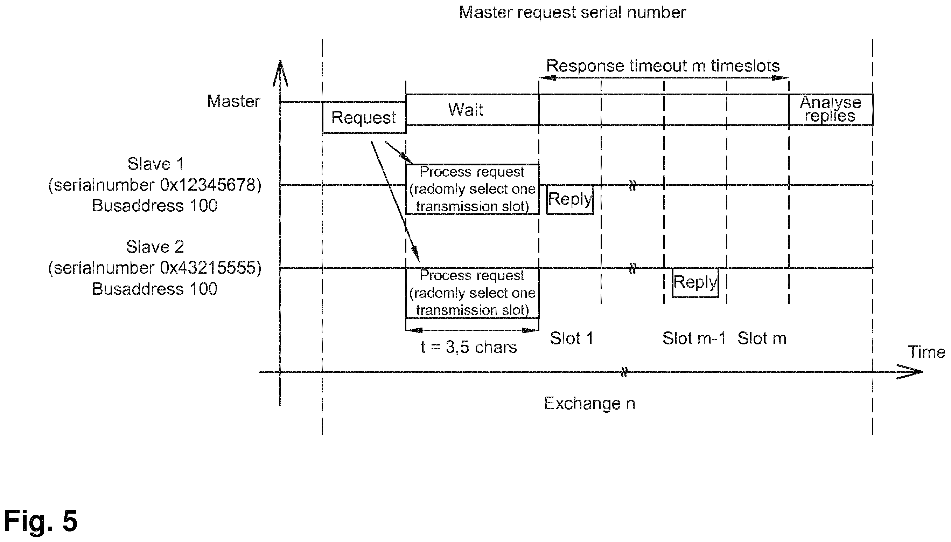

**Fig. 5** zeigt ein Ablaufdiagramm zum Auslesen der Gerätekennzeichnung mit zufälligen Verzögerungszeiten der Antwort.

Dargestellt ist der Fall, wie zwei Geräte mit gleicher Geräteadresse aber unterschiedlicher Gerätekennzeichnung auf eine Anforderung des Masters zum Auslesen der Gerätekennzeichnung reagieren. Zunächst ist ersichtlich, dass beide Geräte, da sie die gleiche angesprochene Geräteadresse aufweisen, auf das Anforderungs-Telegramm des Masters antworten - jedoch in unterschiedlichen Zeitschlitzen. Damit die Antworten überlappungsfrei gesendet werden und damit keine Fehlermeldung auftritt, berechnet jedes Gerät eine eigene zufällige Verzögerungszeit, mit der die jeweilige Antwort gesendet wird.

Das Verfahren der Zuweisung einer Geräteadresse kann somit aufgrund der weiteren Differenzierung eines Gerätes mittels der eindeutigen Gerätekennzeichnung mehrfach wiederholt durchlaufen werden, sodass im Ergebnis sämtliche Geräte als Busteilnehmer auch eine eindeutige Geräteadresse erhalten.

Trotz gleicher Geräteadresse und zunächst unbekannter Gerätekennzeichnung der angeschlossenen Geräte kann diese eindeutige Kennzeichnung für jedes Gerät jedoch ermittelt und danach der Adresskonflikt durch Zuweisung einer neuen Geräteadresse aufgelöst werden.

Das erfindungsgemäße Verfahren beruht ausschließlich auf der standardmäßig vorgesehenen Buskommunikation und verzichtet auf jegliche weitere Hilfsmittel wie z.B. Hardware zur Adresseinstellung (DIP-Schalter, RFID, NFC etc.) oder zusätzliche Signalleitungen und ist daher insbesondere zur Kommunikation mit Geräten wie beispielsweise unzugänglich eingebaute Sensoren, geeignet.

## Patentansprüche

1. Verfahren unter Verwendung des Modbus RTU-Standardprotokolls für eine Master-Slave-Kommunikation zum Auflösen eines Adresskonflikts aufgrund identisch eingestellter Geräteadressen und zum Identifizieren eines an den Modbus angeschlossenen Gerätes mit einer Gerätekennzeichnung, umfassend die Verfahrensschritte:
Senden eines Anforderungs-Telegramms von dem Master, bestehend aus einem Adressfeld für die Geräteadresse, einem Feld für einen Funktionscode, einem Datenfeld sowie einem CRC-Prüffeld,
wobei in dem Datenfeld eine Startregisteradresse für ein Startregister und eine Registeranzahl angegeben werden, die ausgehend von der Startregisteradresse einen Registerbereich unmittelbar aufeinanderfolgender Register definieren,
**dadurch gekennzeichnet,**
**dass** das durch die in dem Adressfeld angegebene Geräteadresse angesprochene Gerät anhand seiner mit dem Anforderungs-Telegramm übertragenen Gerätekennzeichnung eindeutig identifiziert wird und diesem eindeutig identifizierten Gerät eine neue Geräteadresse mit dem gesendeten Anforderungs-Telegramm übermittelt wird.

2. Verfahren nach Anspruch 1,
**dadurch gekennzeichnet,**
**dass** das Anforderungs-Telegramm als Funktionscode den Modbus RTU Funktionscode 0x10 zum Schreiben von Registern enthält, das Anforderungs-Telegramm in dem Datenfeld als Registerinhalt des definierten Registerbereichs die Gerätekennzeichnung enthält,
das Anforderungs-Telegramm in dem Datenfeld als weiterer Registerinhalt des definierten Registerbereichs die neue Geräteadresse enthält, und
das Gerät, dessen Geräteadresse mit der in dem Adressfeld angegebenen Geräteadresse übereinstimmt und dessen Gerätekennzeichnung mit der als Registerinhalt übermittelten Gerätekennzeichnung übereinstimmt, die als weiterer Registerinhalt übermittelte Geräteadresse als neue Geräteadresse übernimmt.

3. Verfahren nach Anspruch 2,
**dadurch gekennzeichnet,**
**dass** ein Startregisterinhalt als Selektor definiert wird, dessen Selektorwert Funktion und Verarbeitung von Registerinhalten des definierten Registerbereichs festlegt, wobei die Übernahme der neuen Geräteadresse als in dem identifizierten Gerät auszuführende Funktion einem bestimmten Selektorwert zugeordnet ist.

4. Verfahren nach Anspruch 3,
**dadurch gekennzeichnet,**
**dass** der definierte Registerbereich das Startregister mit dem Selektorwert, N Register für die Gerätekennzeichnung und ein Register mit der zuzuweisenden neuen Geräteadresse umfasst.

5. Verfahren nach einem der Ansprüche 1 bis 4,
**dadurch gekennzeichnet,**
**dass** die Gerätekennzeichnung eine Seriennummer ist.

6. Verfahren nach Anspruch 1 bis 5,
**dadurch gekennzeichnet,**
**dass** jedes durch die in dem Adressfeld angegebene Geräteadresse angesprochene Gerät mit einer zufälligen Verzögerungszeit auf ein Anforderungs-Telegramm des Masters zum Auslesen der Gerätekennzeichnung antwortet.

7. Verfahren nach Anspruch 6,
**dadurch gekennzeichnet,**
**dass** die zufällige Verzögerungszeit als Vielfaches einer Zeitschlitzdauer derart bestimmt wird, dass die Antworten der Geräte überlappungsfrei und Modbus RTU-konform erfolgen.

8. Verfahren nach Anspruch 7,
**dadurch gekennzeichnet,**
**dass** die minimale Zeitschlitzdauer in Abhängigkeit der durch die Gerätekennzeichnung belegten N Register bestimmt wird.

9. Verfahren nach einem der Ansprüche 6 bis 8,
**dadurch gekennzeichnet,**
**dass** im Falle eines CRC-fehlerfreien Empfangs der Antwort auf das Anforderungs-Telegramm zum Auslesen der Gerätekennzeichnung eine Zuweisung der Geräteadresse gemäß den Ansprüchen 1 bis 5 ausgeführt wird.

10. Verfahren nach einem der Ansprüche 6 bis 9,
**dadurch gekennzeichnet,**
**dass** das Aussenden des Anforderungs-Telegramms zum Auslesen der Gerätekennzeichnung und die Zuweisung einer Geräteadresse zyklisch wiederholt ausgeführt werden, bis in den Antworten der Geräte kein CRC-Fehler mehr auftritt.

11. Verfahren nach einem der Ansprüche 3 bis 10,
**dadurch gekennzeichnet,**
**dass** ein weiterer Selektorwert vorgesehen ist, der als auszuführende Funktion eine Signalanzeige an dem mittels der Gerätekennzeichnung identifizierten Gerät auslöst.
